# EUROPEAN PATENT APPLICATION

(11) **EP 0 744 763 A1**
(43) Date of publication of application: **27.11.1996**
(21) Application number: 96104234.8
(22) Date of filing: 16.03.1996
(51) Int. Cl.: H01J 61/30

(54) **Substantially flat compact fluorescent lamp and manufacturing method thereof**

(30) Priority: 26.05.1995 US 452312
(71) Applicant: MATSUSHITA ELECTRIC WORKS, LTD., Kadoma-shi Osaka 571 (JP)
(72) Inventor: Anandan, Munisamy, Burlington, Massachusetts 01803 (US); Maya, Jacob, Brookline, Massachusetts 02146 (US)
(74) Representative: Dallmeyer, Georg, Dipl.-Ing.

(57) **Abstract**

A substantially flat compact fluorescent lamp (100) is manufactured by using a molded cup (11) with a continuous concentric (spiralled) channel (17) and a circular plate (12), resembling a lid for the cup. The cup with the channel is coated with a light reflective layer (22) followed by a phosphor layer (21) (whereas the plate, on one side, is coated with another phosphor layer only) and has two holes (30) through which two electrodes (14) are sealed such that one of the holes has, in addition to the electrode, an integral exhaust tubulation. A space between the cup (11) and the lid (12) is filled with a material capable of emitting ultraviolet rays under electrical excitation. Electrical discharge created between the electrodes (14) strictly follows the path of the channel physically imposed by the sealed structure, in spite of the non-sealed contact of the top surface of the channel walls and the plane surface of the lid. On absorption of the ultra-violet from the discharge, the phosphor emits visible radiation.

## Description

### BACKGROUND OF THE INVENTION

### Field of the invention:

The present invention relates to a method of manufacturing a substantially flat compact fluorescent lamp with increased efficiency.

### Description of the Prior Art:

The traditional incandescent lamp (IL) generates a luminous flux of, typically, 16 lumens for an input electrical energy of 1 watt and has a life-span of about 750 hours. A compact fluorescent lamp (CFL), on the other hand, is approximately 4 times energy efficient and has a life anywhere from 6000 to 10,000 hours. Hence compact fluorescent lamps are increasingly being used for the conservation of energy and decrease of the replacement cost.

However, the advantages of compact fluorescent lamp are not without a premium. The retrofitting of incandescent lamp involves high degree of compactness for the structure of compact fluorescent lamp. Well known techniques of obtaining the compactness are through bending the typical glass tube into (i) circular form (ii) U-shape (iii) double-U (iv) triple-U and (v) quadruple-U. Generally, the arc-length needs to be increased to obtain high light output. The above complicated bending makes it difficult to maintain high degree of compactness and enhanced arc-length to achieve high light output. In spite of the complex bending, the compact fluorescent lamps tend to be long necessitating external fixtures if these lamps are to be employed for preferential directional lighting. Other associated problems of the compactness are (a) excessive heating and (b) increased phosphor loading. Excessive heating results in high mercury vapor pressure beyond the optimum value needed for maximum luminous efficiency and increased operating temperatures for the electrical components employed at the base of the lamp. thus deteriorating the life of the components and hence the lamp. Increased phosphor loading leads to the faster phosphor degradation and hence the light output. There are known techniques to solve these problems, but not without additional costs and compromises.

U.S. Patent No. 3,226,590 to Christy, employed a large area substantially flat fluorescent lamp called the "panel lamp" that consisted of two corrugated glass plates laid over each other and sealed to withstand the atmospheric pressure by virtue of its corrugation and seal pattern. The electrical discharge path was in the shape of a serpentine or labyrinthine channel. A similar corrugated structure was adopted for a round substantially flat lamp, as shown in U.S. Patent No. 3,243,630 to W.C. Martyny, with a central hole through which no light was generated.

Lamps made in accordance with the above patens are not practical for retrofitting into incandescent lamp applications.

The illustrated limitations and problems of the conventional compact fluorescent lamps are overcome by the substantially flat compact fluorescent lamp described and claimed in U.S. Patent Application No. 08/291,887, filed on August 17, 1994, entitled, "Substantially Flat Compact Fluorescent Lamp" by Jakob Maya and Munisamy Anandan and assigned to the same assignee as the present invention.

### SUMMARY OF THE INVENTION

An object of the present invention is to provide a cost-effective and substantially flat compact fluorescent lamp and a manufacturing method thereof overcoming the above difficulties.

A substantially flat lamp according to the invention comprises a glass or glass-like cup, containing channels with side walls inclined at an obtuse angle to a top surface of the side walls, and a cover plate being hermetically sealed to the cup only at a periphery of the cover plate such that a gap between the cover plate and top surfaces of the side walls is minimized to suppress radial discharge across the channels when the lamp is in regular operation. A space between the cup and the cover plate being filled with inert gas. A phosphor layer is formed on internal surfaces of the channels, and two electron-emissive electrodes provided at two holes through the cup into the channels and sealing the holes. In other words, the glass molded part comprises concentric channels with gas between its side walls and its top surface finely ground to be in physical contact with the plate sealed to the molded part such that these areas of physical contact do not pass electrical discharge across them.

Thus, unwanted gas discharge paths are suppressed by minimizing physical gaps in the lamp rather than sealing the gaps. The invention provides a substantially flat light source with high brightness and uniform intensity across a front surface for use in applications where brightness uniformity is highly desirable. The generated visible light is extracted from the lamp by the proper design of the angle of the walls of the molded part of the lamp. The angle of the channel walls is adjusted to yield optimum light distribution and efficiency.

The substantially flat compact fluorescent lamp is based on a glass-molding technique.

A main starting blank for the manufacture of the lamp resembles a cup with channels formed by glass molding technique. These channels run continuously from a periphery to a center with side walls of the blank dispose at a range of preferred angles to the bottom. The top surface of the channel walls are finely ground with all the internal surfaces of the cup being coated with a reflective coating followed by a light-emissive coating, such as phosphor.

Two electron-emissive electrodes are provided. On of them is integrated to a flare with an exhaust tubulation which embraces a mercury dispenser integral with a getter ring. The other with only the flare is integrated with the end opposite to the electrode closed, is sealed into the two holes integral with the molded cup at peripheral and the central locations such that the electrode with the exhaust tabulation occupies the central hole for stability during the subsequent processing of the lamp.

Preferably, the electrodes are disposed deep into the holes, for generation of light of equal intensity as the surrounding, over the electrode regions. This results in the formation of positive column over the electrodes when viewed end on and thus reduces the dimness usually encountered in the region in close proximity to the electrodes.

A circular glass plate is provided in conformity with the outer diameter of the said processed molded cup. The plate is coated with a thin layer of phosphor, laid flat on the ground surface of the cup and sealed to the cup after preferentially removing the phosphor layer in the region of sealing such that the surface of the circular plate with its phosphor layer physically touches the ground surfaces of the cup. A space between the cup and the plate is evacuated through the exhaust tubulation and filled with a buffer gas after activating the electron-emissive electrodes. A mercury dispenser, integral with a getter, is activated, the mercury is dispensed into an active region between the electrodes, and the lamp is aged and stabilized.

### BRIEF DESCRIPTION OF THE DRAWING

These and other objects and features of the present invention will become clear from the following description taken in conjunction with the preferred embodiments thereof with reference to the accompanying drawings, and in which:
Fig. 1 is an isometric view of the molded glass cup and in a preferred embodiment of the method of the invention installed with two filaments, omitting the internal coatings for clarity;
Fig. 2 is a cross-sectional view of the substantially flat compact fluorescent lamp employing such a molded glass cup, in accordance with the present invention;
Fig. 3 is an expanded view of the cross-section of closed channel formed by sealing the top plate and the molded glass cup of Fig. 2;
Fig. 4 is a cross-sectional view of the molded glass cup;
Fig. 5 is the plan view of the molded cup;
Fig. 6 is the cross-sectional view of the disposition of the electron emissive electrode inside the central channel formed by sealing the top plate to the molded glass cup, omitting the internal coatings for clarity;
Fig. 7 is the same cross-section as in Fig. 6 but with the electron emissive electrode lowered inside the channel;
Fig. 8 is the cross-section of the channel with its side wall straight and the visible rays of light bouncing off the surfaces;
Fig. 9 is the same cross-section of the channel but with the side wall angularly disposed; and
Fig. 10 is the cross-section of the two tier structure of the substantially flat compact fluorescent lamp employing two molded cups.

### DETAILED DESCRIPTION OF PREFERRED EMBODIMENTS

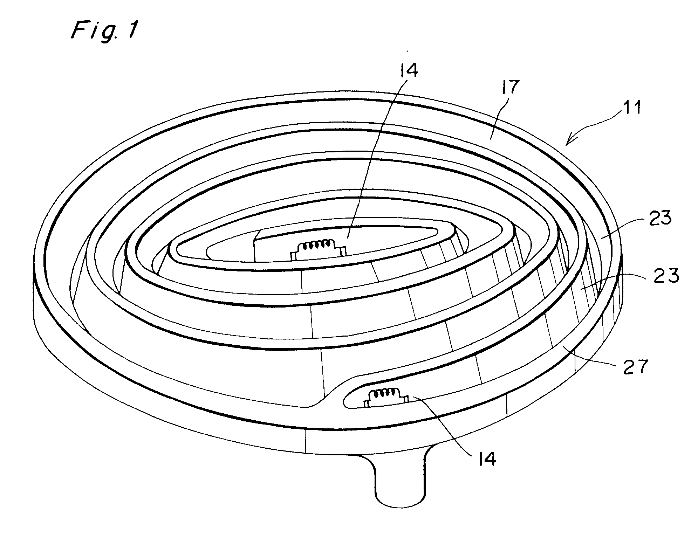

Referring now to the drawings, wherein like reference characters designate like or corresponding parts throughout the views, embodiments of the invention are explained, wherein Fig. 1 is an isometric view of a molded glass or glass-like cup 11, containing electron-emissive electrodes 14, illustrating disposition of concentric channels 17 and the slope of side walls 23 of the channels, omitting internal coatings for clarity. Top surfaces 27 of the channel walls are finely ground. Though the channels 17 shown in Fig. 1 are a continuously running spiral channel, they may be a plurality of channels parallel to each other.

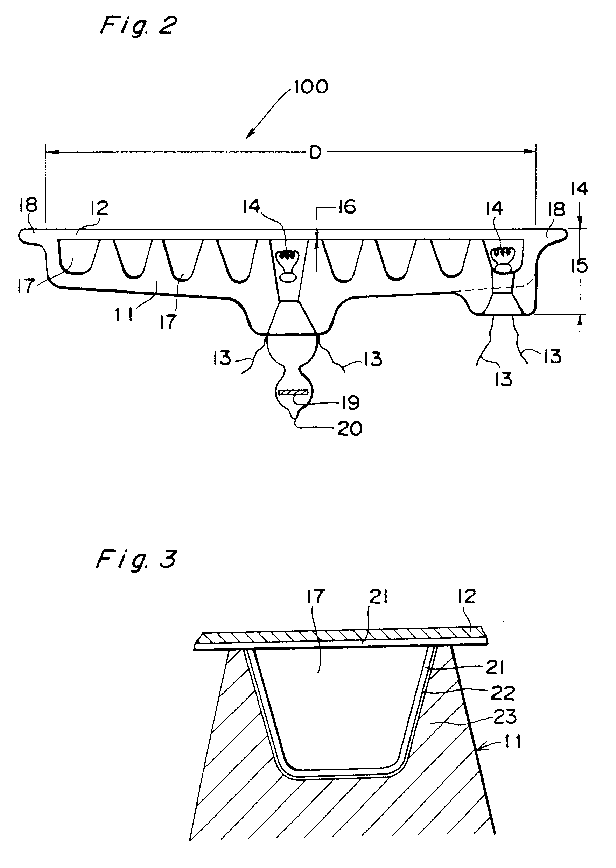

Fig. 2 shows an overall construction of a fully assembled substantially flat compact fluorescent lamp 100 according to the present invention. The present invention is related to the substantially flat compact fluorescent lamp disclosed in the U.S. Patent Application No. 28/17194, assigned to the assignee of the present application.

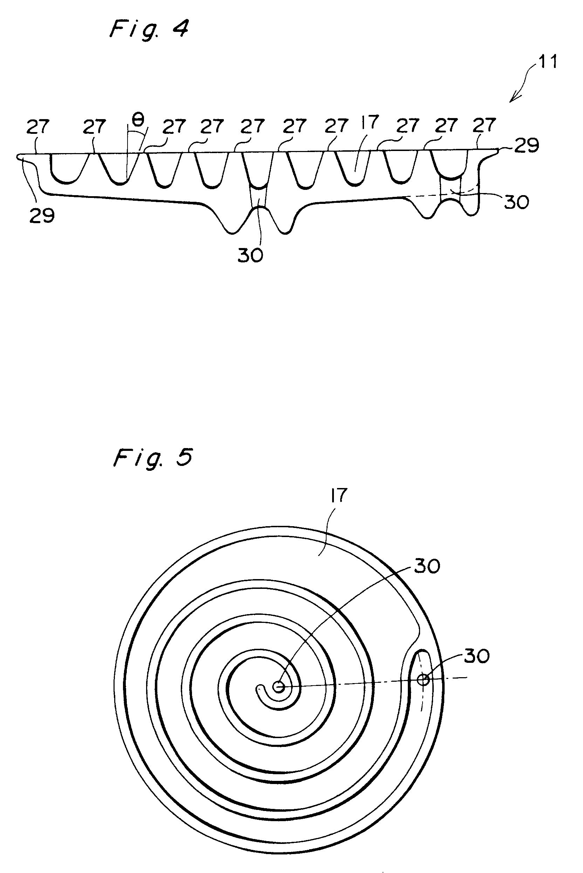

In Fig. 2, an assembled lamp 100 has a molded glass cup 11 which contains an internally coated concentric channel 17. (Details of the channel 17 are shown better in Figs. 1, 4 and 5, and internal coating is shown in Fig. 3.) Two holes 30 (refer to Figs. 4 and 5) into the channel 17 are sealed by two electron emissive electrodes 14 which have external leads 13. An exhaust tubulation integral with the electrode 14 at the central channel houses a getter and mercury dispenser 19 and is sealed off at a position 20 after the lamp has been subjected to a vacuum exhaust processing. A circular flat glass plate 12 of diameter D (5-1/4" in a preferred geometry) with phosphor coating as shown in Fig. 3 is sealed to the molded cup 11 at a seal region 18 such that a clearance 16 between the circular plate 12 and the top surface 27 (refer to Figs. 1 and 4) of the channel wall is less than 0.001". The clearance 16 between the circular plate 12 and the top surfaces 27 of the side walls is sufficient to prevent radial electrical discharge across the channels, except the periphery. In a preferred sealed unit, the height 15 of the assembly from the bottom of the circumferential electrode seal to the top of the circular plate 12 is 0.94", whereas a similar dimension from the bottom of the central electrode seal is 1.13". The portion of the plate 12 in contact with the top surfaces 27 of the channels and the surfaces of the channels can be profiled and molded to give a ball and socket fit to prevent radial electrical discharge across the channels.

In Fig. 3, details of the internal coatings both on the circular glass plate 12 and on the molded glass cup 11 facing the channel 17 are illustrated in cross-section for one channel. The circular glass plate 12 has a phosphor layer 21 on the side facing the channel 17, and the molded glass cup has another phosphor layer 21 followed by a reflective layer 22 formed on the internal surface of the channel 17. The phosphor layer 21 on the plate 12 has a spiral pattern conforming to the topology of the spiral channel 17 on the molded glass cup 11. The phosphor layer on the plate 12 is constructed to suppress radial discharge across the channels 17 by way of its proximity or contact with the top surfaces of the channel walls. The color of the phosphor layer 21 on the plate 12 may be different among a plurality of portions thereof along the channel.

Fig. 4 is a cross-sectional view of the molded glass cup containing two holes 30 for sealing the electron-emissive electrodes and the concentric channel 17 for electrical discharge to run from one electrode (not shown) to the other (not shown). The top surfaces 27 of the channel walls are finely ground, and the side walls are inclined at an obtuse angle (over 90 °) to a bottom surface of the channel and they are disposed at a preferred angle θ = 16°. In a preferred structure the channel width at the top surface 27 is 0.42", and the channel height is 0.4". A flared edge 29 is another part of the molded cup for ease of sealing to the top circular glass plate 12 by flame sealing technique.

Fig. 5 is a top open end view of Fig. 4, depicting the continuity of the channel 17 with the two holes 30, one at the center and the other at the periphery of the molded cup, and in a preferred structure the diameter of the holes 30 is 0.5".

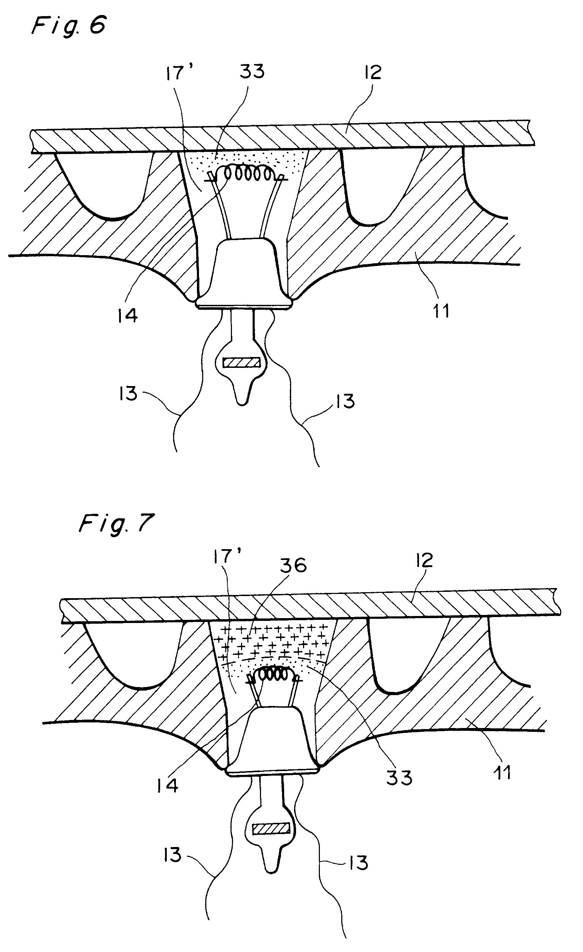

Fig. 6 depicts a cross-sectional view of the electron-emissive electrode 14 sealed into the center channel 17' of the glass molded cup 11 which in turn is sealed to the top circular glass plate 12. Under typical lamp operating conditions the negative glow region 33 is formed over the electrode 14, due to the proximity of the electrode 14 to the top plate 12.

Fig. 7 shows a modified example with the same cross-section as in Fig. 6, but with an electrode 14 lowered inside the channel 17'. Both positive column 36 and negative glow 33 are formed over the electrode 14, due to an increased distance of the electrode from the top plate 12.

The two electrodes 14 are sealed to occupy a level sufficiently below the circular plate 12 to create a positive column 36 over the electrodes 14 to increase the brightness over the electrodes 14 and uniform intensity and distribution of light across the face of the lamp when viewed end-on.

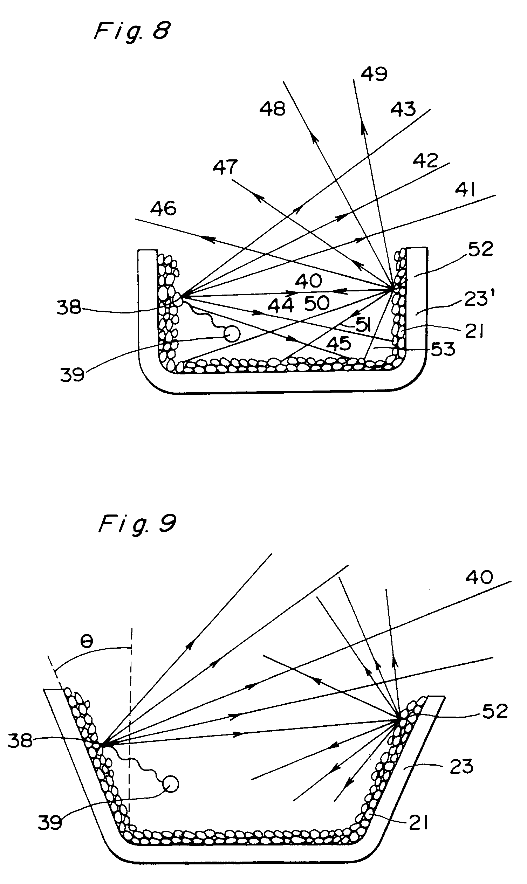

Fig. 8 shows a cross-section of a channel with a side wall 23' being straight and the generation and direction of travel of light upon the incidence of a ultraviolet photon 39 produced in a typical lamp discharge on a phosphor site 38. Fig. 8 also shows the Lambertian distribution of generated light at the site 38 with a peak of the distribution occurring in a direction 40 normal to the side wall 23'. Also shown are the rays of light 42, 43, 44 and 45 at different angles to the normal, the scattered rays of light 46, 47, 48, 49, 50, 51 and 53 at a scattering site 52.

Fig. 9 illustrates a modified example with a similar cross-section to in Fig. 8 but with the side wall 23 of the channel inclined at angle θ. The incidence of a ultraviolet photon 39 at the phosphor site 38 and the resulting light generation, distribution and direction of travel with a peak 40 in the distribution escaping the channel, are all shown. The effect of angle θ on the extraction of the generated light and the resulting brightness increase due to the escape of the peak in the Lambertian distribution is evident.

Electrical discharge created between the electrodes 14, strictly follows the path of the channel physically imposed by the sealed structure, in spite of the non-sealed contact of the top surface 27 of the channel walls and the plane surface of the lid 12. On absorption of the ultraviolet from the discharge, the phosphor in the phosphor layers 21 emits visible radiation.

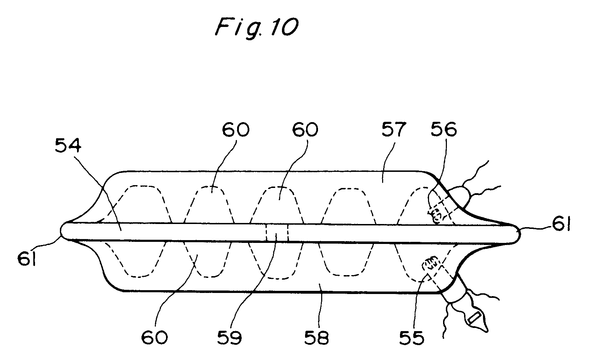

Fig. 10 shows a two tier structure of the cross section of the substantially flat compact fluorescent lamp employing two molded cups 57 and 58, containing channels 60, two electron emissive electrodes 55 and 56, and a circular plate 54 containing a hole 59 at the center for the electrical discharge to connect the two tiers which are sealed to the circular plate in a region 61.

A preferred method of manufacturing the lamp 100 shown in Fig. 2 is described below:
(1) A first step in the manufacturing sequence is molding of a glass cup with a concentric or spiral channel. Two holes 30 of diameter 0.5", as shown in Figs. 4 and 5, are either drilled or molded along with the cup and top surfaces 27 of the channel walls are finely ground to a flatness of 0.001". The molding technique employed for the prototype is "press molding", and this technique has an advantage of realizing complex patterns with desired accuracy. However, this technique has a limitation on the thickness of glass wall, and thus it is difficult to achieve a wall thickness of less than 0.125". The market demands compact fluorescent lamps to be light weight, and hence a need exists for the reduction of weight of the molded glass part. Alternative well known techniques for achieving a lower wall thickness are "blow-molding", "vacuum molding" and "sag-molding". Blow-molding technique is advantageous for glass parts which have a sufficient depth parameter. As the lamp of the present invention is flat and the geometry is shallow, blow molding is not desirable. The vacuum molding draws and presses molten glass into a mold by vacuum suction and can also be employed to generate the molded part used in this invention. "Sag-molding" relies on a glass plate being softened and dropping freely into a mold. Some variations of these molding techniques are "vacuum assisted blow-molding" and "sag-molding".
(2) As soon as the glass part is molded, the part is subjected through an annealing cycle in an annealing oven just next to the molding. The molded glass cup is cleaned, and a reflective layer 22 (Fig. 3) is coated on the inner side of the channel walls 23, and the coated cup is baked at 350 °C for 15 minutes and further heated to 450 °C in air, held for one hour and cooled down. Then, a phosphor layer 21 is coated over the reflective layer 22, as shown in Fig. 3, and an identical heat cycle as for the reflective layer 22 is followed.
(3) A circular glass plate 12 of 1/8" thickness is cleaned and coated with a phosphor layer 21, as shown in Fig. 3, and subjected to heat treatment identical to the above-mentioned reflective layer treatment. The phosphor layer 21 is removed to a width of 1/8" from the edge of the circumference of the round plate 12 over the entire circle for the ease of sealing to the molded cup 11 at a region 18 (as shown in Fig. 2).
(4) A similar removal of the phosphor layer 21 is carried out inside the holes 30 (Fig. 4) for ease of sealing the electron-emissive electrodes 14 (as shown in Fig. 2). The top surfaces 27 of the molded cup are cleaned of any coating, and the circular plate 12 (Fig. 2) is placed well in contact with the top surfaces 27 of the molded cup and sealed only at the circumference in the region 18 as shown in Fig. 2. The skirt 18 is an integral portion of the molded part and is so designed to thin down radially over sufficient length for the ease of flame sealing.
(5) Vacuum-chucking is employed to align and lay the lid or plate 12 flat on the surfaces 27 (Fig. 4) prior to flame sealing. As the molded part in the present invention has sufficient wall thickness exceeding 0.125", preheating, flame-sealing and subsequent annealing are very critical. A physical gap 16 (Fig. 2) between the top surfaces 27 of the channel walls and the circular plate 12, as a result of this sealing, is less than 0.001". This gap will be further reduced when the space between the circular plate 12 and the molded cup 11 is under low pressure because of the atmospheric pressure acting on the circular plate. The gap 16 is critical for the prevention of radial discharge across the channels.
(6) The next step in the sealing is the sealing of electron-emissive electrodes 14 as shown in Fig. 2. A glass flare containing the electron-emissive electrode 14, an exhaust tabulation and a getter with mercury dispenser 19 is sealed into the central hole 30 of the molded cup such that the horizontal level of electrode 14 is approximately 0.25" below the phosphor layer 21 of the circular plate 12. This ensures the formation of positive column 36 over the negative glow 33, as shown in Fig. 7, all occurring over the top of the electrode 14. This formation enhances the light output and uniformity of light distribution across the surface, when viewed end-on, over the top of the electrode 14 because of the increased ultraviolet generation efficiency of positive column 36 in comparison to negative glow 33. In the event of the electrode 14 being in close proximity with the top circular plate 12, only the negative glow 33 will form in front of the electrode 14 and the positive column 36 will be adjacent to it. When viewed end-on the region over the electrode 14 will be relatively dark due to the inefficient generation of ultraviolet rays by the negative glow 33.
(7) The second electrode 14 is sealed into the hole 30 at the periphery of the molded cup in the same manner except that the flare containing the second electrode 14 is closed at the outside. As the wall thickness of the protrusion of the molded cup exceeds 0.125", the preheating, sealing and subsequent annealing are all critical to minimize strain for the prevention of cracks.
(6a-7a) An alternative method of sealing the lid 12 to the cup 11 and the flares to the holes 30 simultaneously is by the use of glass-frit. Preformed frit rings of the correct diameters are placed over a part to be sealed and pressed against opposing surfaces to be sealed. A unit assembled in this way is sent into a traveling belt furnace with a series of temperature zones imparting preheating, sealing ad annealing to the assembly. At a predetermined belt speed the units enter and exit an oven with well annealed frit seal.
(8) The sealed unit is evacuated, and insert gas is filled and sealed off. After the seal-off, the getter is activated and the mercury is dispensed into the lamp, and the lamp is aged and stabilized.

A prototype of the lamp made according to the present invention and tested yielded 1500 lumens at 20 W of power with a lamp voltage at 207 V at a lamp current of 120 mA.

Certain key advantages of the present invention are clear from facts that (i) a glass molded cup has the ease of mass manufacturing the lamp, that (ii) angular disposition of the side walls of the channels extracts the generated light more effectively that a straight side wall as illustrated in Figs. 8 and 9, that (iii) the disposition of the electrodes increases the light output on top of the electrodes, that (iv) suppression of radial discharge is achieved by close control over the gap between the top plate and the top surfaces of the molded cup rather than the laborious procedure of sealing the gap, and finally that (v) the whole lamp is flat and compact.

It will be understood that one skilled in the art could modify the above dimensions and geometry and thus that the above description of the present invention covers such modifications, changes and adaptations By way of example, the number of channels, channel width, channel height and the angle of inclination of the side walls of the channels can be increased or decreased without changing the outer diameter of the molded cup and the circular plate and thus change the lumen package. Similarly, the geometry of the molded part can be changed to derive rectangular, square or oval flat lamps. It is further understood that deviations from the particular sequence of fabrication steps as well as other substitutions are covered by the present invention. The angle of inclination of the side walls of the channel may vary from channel to channel or non-uniform within a channel.

An alternative embodiment of the invention may relocate the electron-emissive electrodes. In other preferred embodiments one more tier of this lamp can be integrated to increase the lumen package. An example of an increased lumen package is illustrated in Fig. 10. In this structure, two pieces of the same molded cup are employed to construct a two-tier lamp by sealing two cups 57 and 58 to a circular plate 54, containing a central hole 59 for the continuity of electrical discharge from the bottom tier to the top tier, at regions 61. The electrical discharge from an electrode 55 goes through the channel 60 at the bottom cup 58, through the central hole 59, through the concentric channel starting from the center to the periphery and finally to another electrode 56.

In another alternative embodiment, the inner surfaces of the lamp is covered with visible and ultraviolet radiation reflecting material, such as Al₂O₃, SiO₂, etc., everywhere except the viewing surfaces.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A substantially flat compact fluorescent lamp comprising:
(a) a glass or glass-like cup comprising channels formed between side walls and having two holes;
(b) a phosphor layer formed on internal surfaces of the channels; and
(c) two electron-emissive electrodes sealed hermetically at two holes provided through the cup into the channels; and
(d) a cover plate being hermetically sealed to the cup only at a periphery of the cover plate such that a gap between the cover plate and top surfaces of the side walls is minimized to suppress discharge across the channels when the lamp is in regular operation, a space between the cup and the cover plate being filled with inert gas.

2. The lamp as defined in claim 1, wherein inclination of the side walls has an obtuse angle with respect to the top surface of the side wall.

3. The lamp as defined in one of claims 1 and 2, wherein the channels are made of a spiral channel running continuously from one electrode to the other of the two electrodes.

4. The lamp as defined in one of claims 1 to 3, wherein the channels have a uniform trapezoidal or rectangular or square or circular, or oval cross-section.

5. The lamp as defined in one of claims 1 to 4, wherein the channels comprises an elongated channel consisting of portions arranged in parallel to each other.

6. The lamp as defined in one of claims 1 to 5, wherein the two holes are located in a channel with a partition between them and the channel joins them in a continuous path.

7. The lamp as defined in one of claims 1 to 6, wherein another phosphor layer is applied to the plate so that it extends to its proximity or contact with top surfaces of the side walls of the channels.

8. The lamp as defined in claim 3, wherein another phosphor layer is applied to the plate to have a spiral pattern conforming the spiral channel.

9. The lamp as defined in one of claims 1 to 8, wherein a reflective layer is provided between the internal surface of the channels and the fluorescent layer.

10. The lamp as defined in one of claims 1 to 9, wherein the side walls have polished top surfaces to transmit some light through them for better uniformity of light over the plate.

11. The lamp as defined in one of claims 1 to 10, further comprising another glass or glass-like cup, containing other channels with other side walls inclined at an obtuse angle to a top surface of the other side walls, wherein the cover plate is hermetically sealed to the another cup only at a periphery of the cover plate such that a gap between the cover plate and top surfaces of the other side walls is minimized to suppress radial discharge across the channels when the lamp is in regular operation, and the cover plate has a throughhole connecting the channels in the two cups.

12. A method of manufacturing a substantially flat compact fluorescent lamp comprising the steps of:
providing a molded glass cup containing channels with side walls inclined at an obtuse angle to top surfaces of the side walls, and coating all its internal surfaces with a phosphor layer;
providing a circular plate of diameter equal to the outer diameter of the molded cup, coating a phosphor layer on the plate, sealing the circular plate to the molded cup only at a periphery thereof such that a gap between the phosphor layer on the circular plate and the top surfaces of the side walls is minimized to suppress radial discharge across channels when the lamp is in regular operation;
forming two holes with glass flares in the molded cup, and sealing two electron-emissive electrodes in the two holes, one electrode with integral exhaust tubulation and a mercury dispensing getter and the other with its external end closed, in a manner that the electrode with the exhaust tubulation occupies first of the holes with its electron-emissive surface sufficiently below the phosphor layer on the plate, so as to form a positive column over the electrode, in the regular operation of the lamp, where viewed end-on, and the electrode with its external end of the flare closed, is sealed into second of the holes at the periphery of the molded cup in the same level as the electrode occupying the first hole of the molded cup; and
evacuating a space between the plate and the molded cup, and filling and sealing the space with inert gas.

13. The method as claimed in claim 12, wherein the circular plate is sealed to the molded cup with frit-sealing and the flares containing the electron-emissive electrodes is sealed to the molded cup with frit-sealing.

14. The method as defined in one of claims 12 and 13, wherein the cover plate and the lip of the molded cup extend beyond the periphery of a main body of the cup to facilitate flame sealing of the plate and the cup.
